# EUROPÄISCHE PATENTANMELDUNG

(11) **EP 3 981 728 A1**
(43) Veröffentlichungstag der Anmeldung: **13.04.2022**
(21) Anmeldenummer: 20200681.3
(22) Anmeldetag: 08.10.2020
(51) Int. Cl.: B66C 13/16, B66C 23/16, B66C 23/20, B66D 3/18

(54) **HANDGEFÜHRTE MOBILE HEBEVORRICHTUNG**

(71) Anmelder: Siemens Aktiengesellschaft, 80333 München (DE)
(72) Erfinder: Schulte, Sascha, 91088 Bubenreuth (DE); Dillinger, Simon, 90489 Nürnberg (DE)

(57) **Zusammenfassung**

Die Erfindung betrifft eine handgeführte mobile Hebevorrichtung (2), die im betriebsbereiten Zustand an einer Hilfsvorrichtung (4) angebracht ist,
- mit einer Antriebseinheit (6),
- einer im Betriebszustand im Wesentlichen horizontal verlaufende Hebekonsole (8), die eine Stützvorrichtung (10) umfasst und durch diese an der Hilfsvorrichtung (4) abgestützt ist,
- sowie mit einer an der Hebekonsole angeordneten Seilführungsvorrichtung (12) und einem Tragseil (14),
- wobei an dem Tragseile (14) eine handgeführte Greifvorrichtung (16) angebracht ist,
dadurch gekennzeichnet, dass
- an der horizontal verlaufenden Hebekonsole (8) ein Kraftsensor (20) angeordnet ist.

## Beschreibung

Die Erfindung betrifft eine handgeführte mobile Hebevorrichtung nach dem Oberbegriff des Patentanspruchs 1 sowie ein Verfahren zum Betreiben einer handgeführten mobilen Hebevorrichtung nach dem Oberbegriff des Patentanspruchs 9.

Beim Aufbau von Geräten in enger räumlicher Umgebung, z. B. beim Einrichten von Schaltschränken oder Batteriespeichersystemen, sind mitunter Komponenten mit hohem Gewicht zu verbauen. Ein Bespiel hierfür sind Batteriemodule, die ca. 60 kg wiegen und deren Gewicht zu groß für die einfache und sichere Montage durch eine einzelne Person ist. Bei einer Montage au-βerhalb der klassischen Produktionsstätten und Fabriken muss daher eine entsprechende Anzahl an Montagepersonal eingeplant werden, welches lediglich zum Heben und Halten der Komponenten anwesend ist. Dies führt zu erhöhten Personalkosten bei gleichzeitig auftretenden arbeitsmedizinischen Anforderungen und Mehraufwand durch Arbeitssicherheitsmaßnahmen.

Üblicherweise wird die Montage entweder innerhalb von Fabriken unter Verwendung professioneller Kransysteme oder sonstiger ortsgebundener Hebesysteme wie beispielsweise Robotern durchgeführt. Ist eine Montage bei einem Kunden oder auf einer Baustelle notwendig, z. B. weil bei einem Batterieschrank der Transport der Batteriemodule innerhalb des Schrankes nicht erlaubt ist oder das komplett vormontierte Schranksystem nicht an den gewünschten endgültigen Standort transportiert werden kann, dann wird zusätzliches Personal zum händischen Heben der Module in die Schränke eingeplant.

In der produzierenden Industrie ist der Einsatz verschiedener Kraftunterstützungssysteme weit verbreitet und als Stand der Technik anzusehen. Darunter fallen beispielsweise hydraulische Seil-, oder kettenbasierte- oder roboterarmbasierte Hebesysteme. Diese Systeme haben als Grundkonzept das eigentliche Hebesysteme mit maschineller Kraftaufbringung sowie am Aufnahmepunkt eine Kombination aus Kraftsensoren, die das Führen der Gewichtslast über eine Handbedienung erlaubt. Dazu wird üblicherweise oberhalb und unterhalb des Handgriffes die jeweilige Kraft, insbesondere die Gewichtskraft gemessen und aus der Differenz die vom Menschen eingeprägte Kraft, die im Weiteren als Steuerkraft bezeichnet wird, oder die gewünschte Bewegungsrichtung ermittelt. Nachteilig ist dabei, dass diese Systeme üblicherweise schwer und sperrig und somit ortsgebunden sind. Insbesondere braucht die am Aufnahmepunkt angebrachte Sensorkombination vergleichsweise viel Platz in Hubrichtung und ist daher also nicht für die Verwendung in räumlich begrenzten Umgebungen wie Gerätekellern geeignet.

Die Aufgabe der Erfindung besteht darin, eine handgeführte und mobile Hebevorrichtung sowie ein Verfahren zum Betreiben einer derartigen Vorrichtung bereitzustellen, die gegenüber dem bekannten Stand der Technik einen deutlich reduzierten Bauraumbedarf aufweist und mobil in einer engen Umgebung einsetzbar ist.

Die Lösung der Aufgabe besteht in einer handgeführten mobilen Hebevorrichtung mit den Merkmalen des Patentanspruchs 1 sowie in einem Verfahren zum Betreiben einer handgeführten mobilen Hebevorrichtung mit den Merkmalen des Patentanspruchs 9.

Die handgeführte mobile Hebevorrichtung nach Patentanspruch 1 ist im Betriebszustand an einer Hilfsvorrichtung, die nicht Bestandteil der Hebevorrichtung ist, angebracht. Die Hebevorrichtung weist eine Antriebseinheit und eine im Betriebszustand im Wesentlichen horizontal verlaufende Hebekonsole auf. Dabei ist unter dem Begriff im Wesentlichen horizontal verlaufend verstanden, dass je nach Positionierung der Hebevorrichtung an der Hilfsvorrichtung und der Ausrichtung der Hilfsvorrichtung der Verlauf der Hebekonsole nicht mehr als +/- 10° von der Waagrechten abweicht. Ferner umfasst die Hebekonsole eine Stützvorrichtung und ist durch dies an der Hilfsvorrichtung abgestützt. Es ist zudem eine Seilführungsvorrichtung an der Hebekonsole angeordnet, die ein Tragseil führt, wobei an dem Tragseil eine handgeführte Greifvorrichtung angebracht ist. Die Greifvorrichtung dient zur Aufnahme einer Last, die ebenfalls nicht Teil der Hebevorrichtung ist. Die Erfindung zeichnet sich dadurch aus, dass an der horizontal verlaufenden Hebekonsole ein Kraftsensor angeordnet ist.

Der Vorteil der Erfindung besteht darin, dass die mobile Hebevorrichtung für sich genommen sehr leicht ist durch eine einzelne Person an der Hilfsvorrichtung anbringbar ist. Durch die Antriebsvorrichtung und die Seilführungsvorrichtung kann eine entsprechende Last bis zu einem relativ hohen Gewicht (beispielsweise 50 kg- bis 100 kg) gehoben werden. Ferner kann durch die beschriebene Anordnung des Kraftsensors an der Hebekonsole eine aufwändige Sensoranordnung in der Greifvorrichtung mit entsprechenden Handführungsvorrichtungen verzichtet werden, was sich ausgesprochen bauraumsparend auswirkt. Dadurch kann die beschriebene Hebevorrichtung in engem räumlichem Umfeld angewandt und bedient werden. In herkömmlichen Verfahren nach dem Stand der Technik, bei dem auch genügend Raum zur Verfügung steht, werden mindestens zwei Kraftsensoren in verschiedenen Richtungen an der Greifvorrichtung vorgesehen. Auch dieser Aufwand entfällt bei der beschriebenen Vorrichtung. Durch die Anbringung des Kraftsensors an der Hebekonsole kann über Kenntnis der Kraftwirkung in der Hebevorrichtung an sich auf die anliegende Kraft am Seil rückgeschlossen werden.

In einer vorteilhaften Ausgestaltungsform der Erfindung ist der Kraftsensor an einer der Hilfsvorrichtung zugewandten Seite der Hebekonsole angebracht. An diesem Ort ist eine genaue und effiziente Kraftmessung möglich. Dabei ist es zweckmäßig, wenn die Kraftmessung in horizontale Kraftmessrichtung erfolgt.

Ferner ist es zweckmäßig, dass eine Messung einer Zugkraft durch den Kraftsensor erfolgt, wobei eine Anordnung des Kraftsensors im oberen Bereich der Hebevorrichtung, insbesondere an dem der Hilfsvorrichtung zugewandten Ende der Hebekonsole bevorzugt ist, da dort eine Zugkraft auftritt. Sollte der Kraftsensor in der Stützvorrichtung angebracht sein, so wäre auch die Messung einer Druckkraft zweckmäßig.

Ferner ist es zweckmäßig, dass eine Steuervorrichtung vorgesehen ist, durch die eine Bestimmung einer vertikal am Seil anliegenden Kraft mittels einer durch den Kraftsensor bestimmten Kraft erfolgt. Durch den Kraftsensor wird wie beschrieben nicht direkt die Kraft gemessen, die an dem Tragseil anliegt, sodass über eine entsprechende geometrische Bedingung, die von der Anordnung des Kraftsensors an der Hebekonsole abhängig ist, mittels der Steuervorrichtung auf die entsprechende Kraft am Tragseil rückgeschlossen wird.

In einer bevorzugten Ausgestaltungsform weist die Seilführungsvorrichtung eine Seilumlenkvorrichtung auf, die an dem der Hilfsvorrichtung abgewandten Ende der Hebekonsole angeordnet ist. Auf diese Weise kann das Zugseil soweit wie möglich von der Hilfsvorrichtung entfernt senkrecht nach unten verlaufen und die Bewegungsfreiheit beim Handhaben der Last durch die Greifvorrichtung verbessern.

In einer weiteren Ausgestaltungsform der Erfindung ist die Stützvorrichtung, die Teil der Hebekonsole ist, in einem spitzen Winkel α zur Hilfsvorrichtung angeordnet und an dieser befestigt. Grundsätzlich kann der Kraftsensor auch an der Stützvorrichtung im Bereich der Befestigung dieser an der Hilfsvorrichtung angeordnet sein. In diesem Fall würde bevorzugt eine Druckkraft gemessen werden.

Grundsätzlich kann die beschriebene Hebevorrichtung an verschiedenen Hilfsvorrichtungen, bei der eine Montage von Komponenten notwendig ist, angewandt werden. Besonders vorteilhaft ist die Anwendung der Hebevorrichtung an einem Schaltschrank oder an einem Batterieschrank, bei dem schwere Module wie beispielsweise Batteriemodule eingebracht werden.

Ein weiterer Bestandteil der Erfindung ist ein Verfahren zum Betreiben einer handgeführten mobilen Hebevorrichtung nach Anspruch 10. Dieses Verfahren umfasst folgende Schritte:
- Zunächst das Anbringen einer Hebekonsole mit einer Antriebsvorrichtung, einer Seilführungsvorrichtung und einer Stützvorrichtung an einer Hilfsvorrichtung, ferner
- das Aufnehmen einer Last mittels einer Greifvorrichtung, wobei Hilfsvorrichtung und Last kein Bestandteil der Hebevorrichtung sind.

Die Erfindung zeichnet sich dadurch aus, dass die Messung einer Kraft, die an der Hebekonsole anliegt, erfolgt und aus dieser die Bestimmung einer an der Greifvorrichtung anliegenden Vertikalkraft aus der an der Hebekonsole gemessenen Kraft erfolgt.

Das erfindungsgemäße Verfahren nach Patentanspruch 10 weist dabei die gleichen Vorteile auf, die bereits zur Vorrichtung gemäß Anspruch 1 beschrieben sind.

In einer weiteren Ausgestaltungsform der Erfindung wird an der Hebekonsole eine Horizontalkraft gemessen. Dies ist daher vorteilhaft, da an der Hebekonsole durch den beschriebenen Aufbau der Hebevorrichtung insbesondere eine Zugkraft anliegt.

In einer weiteren Ausgestaltungsform der Erfindung wird das Verfahren in der Form angewandt, dass beim Aufnehmen der Last durch die Greifvorrichtung eine Tarierung zur Bestimmung der Gewichtskraft der anliegenden Last erfolgt. Mittels der gemessenen Horizontalkraft wird dabei die vom Bediener eingebrachte Steuerkraft ermittelt.

Der Vorteil dieser Tarierung besteht daraus, dass zunächst die Gewichtskraft ermittelt wird, und Abweichungen von der Gewichtskraft auf die Steuerkraft hinweisen, die ein Bediener beim Verfahren der Last einbringt.

Weitere Ausgestaltungsformen und weitere Merkmale der Erfindung werden anhand der folgenden Figuren näher erläutert. Dabei handelt es sich um rein schematische Ausgestaltungsformen, die keine Einschränkung des Schutzbereiches darstellen.

Dabei zeigen:
- Figur 1: eine dreidimensionale Darstellung einer mobilen handgeführten Hebevorrichtung an einer Hilfsvorrichtung,
- Figur 2: eine seitliche Darstellung der Hebevorrichtung gemäß Figur 1 im Bereich einer Hebekonsole,
- Figur 3: eine Draufsicht auf die Darstellung gemäß Figur 2 und
- Figur 4: eine Kräftediagramm, der an der Hebevorrichtung anliegenden Kräfte.

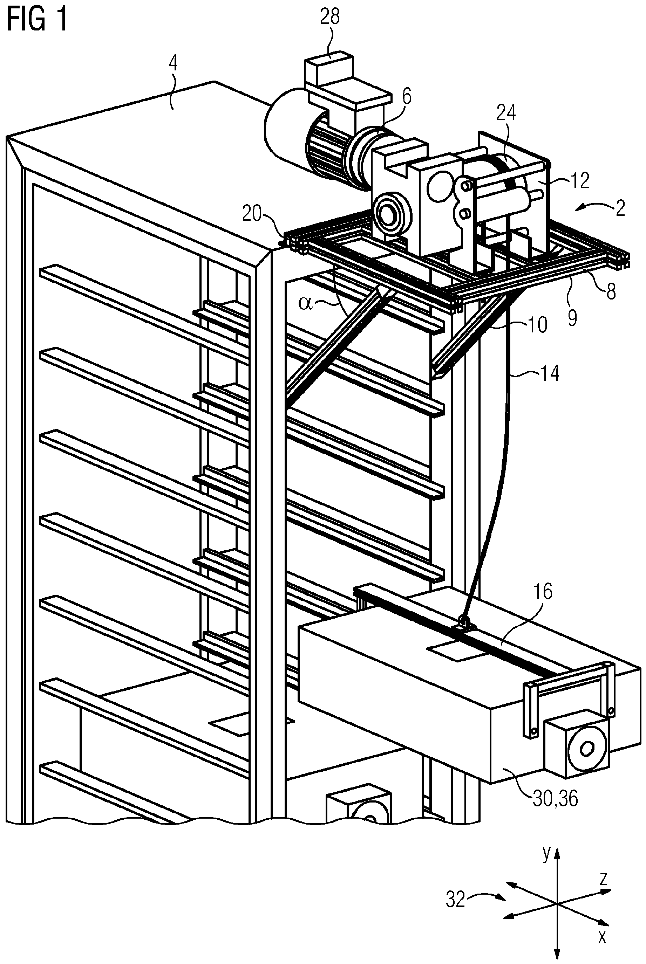

In Figur 1 ist eine dreidimensionale Darstellung einer Hebevorrichtung 2 gegeben, die an einer Hilfsvorrichtung 4 angebracht ist. Die Hilfsvorrichtung 4 ist in diesem Fall schematisch als Batterieschrank ausgestaltet, in den Batteriemodule 36 eingebracht werden.

Die Hebevorrichtung 2 ist dabei an dem oberen Bereich der Hilfsvorrichtung 4 angeordnet. Sie weist eine Hebekonsole 8 auf, die eine Hebeplattform 9 sowie eine Stützvorrichtung 10 umfasst. Die Hebeplattform 9 läuft dabei im Wesentlichen senkrecht vom oberen Bereich der Hilfsvorrichtung 4 von dieser weg und steht dabei räumlich gesehen waagrecht. Sie wird durch die Stützvorrichtung 10 gestützt, wobei die Stützvorrichtung in einem spitzen Winkel α von der Hebeplattform 9 zur Hilfsvorrichtung 4 verläuft. An der Hebeplattform 9 ist des Weiteren eine Antriebseinheit 6 angebracht, die mit einer Seilführungsvorrichtung 12 in Verbindung steht und über die ein Tragseil 14 auf und ab bewegt werden kann. An einem Ende des Tragseils 14 ist eine Greifvorrichtung 16 angeordnet, über die eine Last 30, in dem Beispiel der Figur 1 ein Batteriemodul 36, in die Hilfsvorrichtung 4 eingebracht werden kann.

Dabei ist die Hebevorrichtung 2 sowohl mobil ausgestaltet als auch handgeführt. Dies bedeutet, dass die Hebevorrichtung 2 durch eine Bedienperson transportiert werden kann und an einer ortsfesten Hilfsvorrichtung 4 montiert werden und wieder abgenommen werden kann. Unter dem Begriff handgeführt wird dabei verstanden, dass mittels der Greifvorrichtung 16 die Last 30 entlang des durch die Pfeile 32 angedeuteten Koordinatensystems verschoben werden kann. Insbesondere in die Richtungen X- und Z-Richtung des Koordinatensystems 32 wird dabei die Last 30 vom Bedienpersonal verschoben. Eine Bewegung in Y-Richtung wird dabei insbesondere durch die Antriebseinheit 6 vollzogen. Wobei auch durch das Bedienpersonal leichte Kraftkomponenten in Y-Richtung aufgebracht werden können und in der Praxis auch aufgebracht werden.

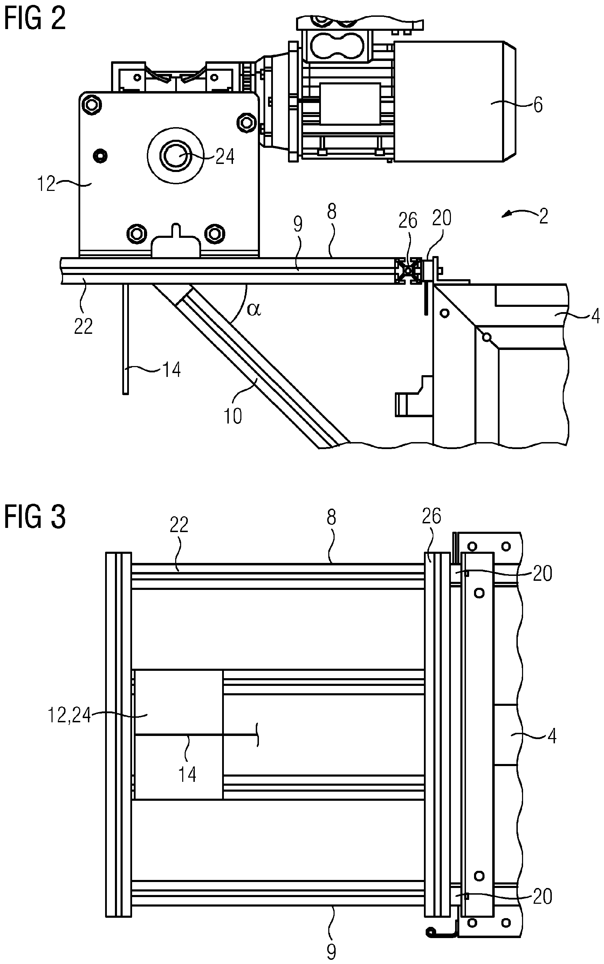

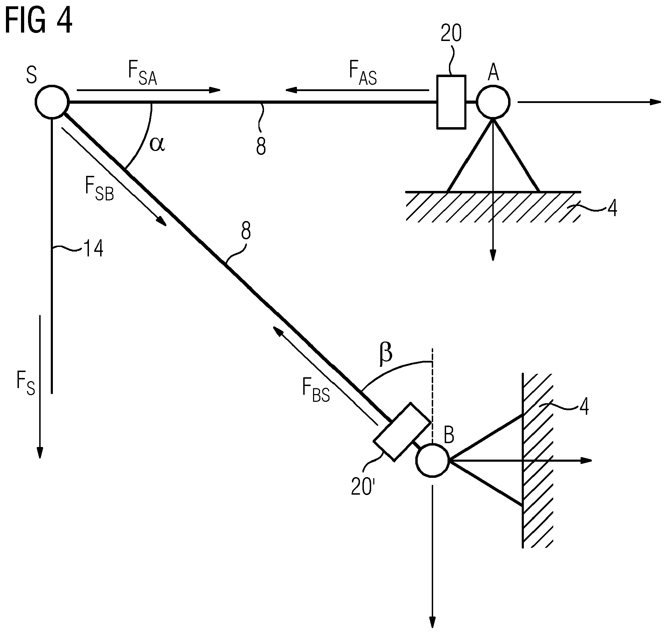

An der Hebekonsole 8 sind dabei an einer der Hilfsvorrichtung 4 zugewandten Seite 26 Kraftsensoren 20 angeordnet. Die Lage der Kraftsensoren 20 ist in Figur 1 dargestellt, detaillierter ist diese noch in den Figuren 2 und 3 zu erkennen. Dabei sind in diesem Ausführungsbeispiel zwei Kraftsensoren 20 vorgesehen. Wie bereits erwähnt, sind in den Figuren 2 und 3 jeweils eine Seitenansicht und eine Draufsicht auf die Hebevorrichtung 2, insbesondere die Hebekonsole 8 gegeben. Das bei diesem Ausführungsbeispiel vorherrschende Kräfteverhältnis wird in dem Kräftediagramm gemäß Figur 4 erläutert. Hierbei sind die Punkte A, S und B definiert. Der Punkt A ist der Punkt, an dem die Hebeplattform 9 an der Hilfsvorrichtung 4 angebracht ist. Der Punkt B repräsentiert den Punkt, an dem die Stützvorrichtung 10 an der Hilfsvorrichtung 4 anliegt. Ferner ist der Punkt S der weiteste von der Hebevorrichtung 2 entfernte Punkt der Hebeplattform 9, der auch mit dem Umlenkpunkt der Seilumlenkvorrichtung 24, die Bestandteil der Seilführungsvorrichtung 12 ist, zusammenfällt. In Figur 4 ist zu erkennen, dass an dem Tragseil 14 eine Kraft F_{S} in Richtung der Gewichtskraft anliegt. Die Kraft F_{S} ist jedoch nicht immer mit der Gewichtskraft, die hier nicht eingezeichnet ist, identisch. Dadurch, dass das Bedienpersonal entlang des Koordinatensystems 32 Kräfte aufbringt, können diese bezüglich der reinen Gewichtskraft der Last 30 additiv oder subtraktiv zu F_{S} wirken.

Je nach Anordnung des Kraftsensors 20 an der Hebeplattform 8 ist es möglich, die Kraft F_{S} indirekt zu bestimmen. In dem vorliegenden Beispiel gemäß Figur 4 ist der Kraftsensor 20 in einer horizontalen Lage an der Hebeplattform 8 angeordnet. Dabei wird eine horizontale Kraft gemessen, in diesem Fall ist diese mit F_{AS} bezeichnet. Die Kraft F_{S} entspricht in etwa, aber nicht genau, der Kraft F_{AS}, da über den Umlenkpunkt S noch Reibungsverluste zu erwarten sind. Daher ist eine Steuervorrichtung 28 vorgesehen, die schematisch in Figur 1 an der Antriebseinheit 6 angebracht ist, die jedoch auch an einem anderen Teil der Hebevorrichtung 2 angebracht sein kann. Die Steuervorrichtung 28 ermittelt mit Informationen, die beispielsweise aus dem Kräftediagramm gemäß Figur 4 ermittelbar sind, anhand von bekannten Kraftgleichungen und Reibungsverlusten die Kraft F_{S}. Dabei wird bevorzugt zunächst die Last 30 an die Greifvorrichtung 16 angebracht und angehoben. In diesem Moment, wenn keine zusätzliche Bewegung und Kraft durch den Bediener aufgebracht wird, kann eine Tarierung vorgenommen werden und somit über den Kraftsensor 20 und die zusätzlichen Informationen die bezüglich des Kraftdiagramms nach Figur 4 vorliegen, die Gewichtskraft der Last 30, beispielsweise des Batteriemoduls 36 bestimmt werden. Nach diesem kurzen Anheben und der Tarierung ist somit die Gewichtskraft bekannt und die Kraft F_{S}, die indirekt über die Kraftsensoren 20 bestimmt wird, lässt nun durch Berechnung der Steuerungsvorrichtung 28 Rückschlüsse über die Kräfte zu, die das Bedienpersonal in die Richtungen des Koordinatensystems 32, insbesondere in X- und Z-Richtung in das System einbringt. Diese Information über die entsprechenden eingebrachten Kräfte des Bedienpersonals ist für die Steuerung der Hebevorrichtung, insbesondere der Steuerung der Antriebsvorrichtung, von Bedeutung.

Ein besonderer Vorteil gegenüber dem Stand der Technik, bei dem die Kraftsensoren in der Greifvorrichtung angebracht sind, besteht darin, dass der an der Hebekonsole angebrachte Kraftsensor 20 einen wesentlich geringeren konstruktiven Aufwand und einen geringeren Bauraum benötigt. Somit kann die Hebevorrichtung 2 auch in engen Räumen an der Hilfsvorrichtung 4 gehandhabt werden. Der Kraftsensor 20 misst dabei gemäß Figur 4 die Kraft in rein horizontaler Richtung. Die Hebeplattform 9 ist dabei auch im Wesentlichen horizontal bezüglich der Hilfsvorrichtung 4 angebracht. Dabei hängt die horizontale Ausrichtung der Hebeplattform 9 insbesondere auch von der Ausrichtung der Hilfsvorrichtung 4 und deren Position am Boden ab. Die Abweichung vom reinen Horizontalen kann dabei +/- 10° betragen. Ferner kann es auch zweckmäßig sein, dass der Kraftsensor 20 am Punkt B angeordnet ist, in diesem Fall würde bevorzugt keine Zugkraft gemessen werden, wie das im vorliegenden Beispiel der Fall ist, sondern eine Drucckraft. Diese Kraft analog der Kraft F_{BS}, wie sie in Figur 4 eingezeichnet ist, könnte über den bekannten Winkel α und weiteren Informationen mittels der Steuervorrichtung 28in die Kraft F_{S} umgerechnet werden. In diesem Fall wäre der Kraftsensor 20 auch nicht streng horizontal ausgerichtet, sondern gemäß eines Winkels β in das Kraftdiagramm eingebracht.

### Bezugszeichenliste

- 2: Hebevorrichtung
- 4: Hilfsvorrichtung
- 6: Antriebseinheit
- 8: Hebekonsole
- 9: Hebeplattform
- 10: Stützvorrichtung
- 12: Seilführungsvorrichtung
- 14: Tragseil
- 16: Greifvorrichtung
- 18: Kraftmessvorrichtung
- 20: Kraftsensor
- 22: abgewandtes Ende
- α: spitzer Winkel
- 24: Seilumlenkvorrichtung
- F_{AS}: Zugkraft
- 26: zugewandte Seite
- 28: Steuervorrichtung
- F_{S}: Seilkraft
- 30: Last
- A: Befestigungspunkt Hebekonsole
- B: Befestigungspunkt Stützvorrichtung
- C: Seilumlenkpunkt
- F_{(ABS)}: Kräfte zwischen A, B und C
- 32: Bewegungsrichtung Last
- 36: Batterie

## Patentansprüche

1. Handgeführte mobile Hebevorrichtung (2), die im betriebsbereiten Zustand an einer Hilfsvorrichtung (4) angebracht ist,
- mit einer Antriebseinheit (6),
- einer im Betriebszustand im Wesentlichen horizontal verlaufende Hebekonsole (8), die eine Stützvorrichtung (10) umfasst und durch diese an der Hilfsvorrichtung (4) abgestützt ist,
- sowie mit einer an der Hebekonsole angeordneten Seilführungsvorrichtung (12) und einem Tragseil (14),
- wobei an dem Tragseile (14) eine handgeführte Greifvorrichtung (16) angebracht ist,
**dadurch gekennzeichnet, dass**
- an der horizontal verlaufenden Hebekonsole (8) ein Kraftsensor (20) angeordnet ist.

2. Hebevorrichtung nach Anspruch 1, **dadurch gekennzeichnet, dass** der Kraftsensor (20) an einer der Hilfsvorrichtung (4) zugewandten Seite (26) der Hebekonsole (8) angeordnet ist.

3. Hebevorrichtung nach Anspruch 2, **dadurch gekennzeichnet**, eine Kraftmessung in horizontaler Kraftmessrichtung (18) erfolgt.

4. Hebevorrichtung nach einem der vorhergehenden Ansprüche, **dadurch gekennzeichnet, dass** durch den Kraftsensor (20) eine Messung einer Zugkraft (F_{AS}) erfolgt.

5. Hebevorrichtung nach einem der vorhergehenden Ansprüche, **dadurch gekennzeichnet, dass** eine Steuervorrichtung (28) vorgesehen ist, durch die eine Bestimmung einer vertikal am Seil anliegender Kraft (F_{S}) mittels einer durch den Kraftsensor bestimmten Kraft erfolgt.

6. Hebevorrichtung nach Anspruch 6, **dadurch gekennzeichnet, dass** durch die Steuervorrichtung (28) mittels der gemessenen Kraft und der daraus abgeleiteten Vertikalkraft (F_{S}) eine Berechnung einer von einem Bediener eingebrachten Steuerkraft erfolgt.

7. Hebevorrichtung nach einem der vorhergehenden Ansprüche, **dadurch gekennzeichnet, dass** die Seilführungsvorrichtung (12) eine Seilumlenkvorrichtung (24) aufweist, die an dem der Hilfsvorrichtung (4) abgewandten Ende (22) der Hebekonsole (8) angeordnet ist.

8. Hebevorrichtung nach einem der vorhergehenden Ansprüche, **dadurch gekennzeichnet, dass** die Stützvorrichtung (10) von einem der Hilfsvorrichtung (4) abgewandten Ende (22) der Hebekonsole (8) in einem spitzen Winkel (α) zur Hilfsvorrichtung (4) verläuft und an dieser befestigt ist.

9. Hebevorrichtung nach einem der vorhergehenden Ansprüche, **dadurch gekennzeichnet, dass** die Hilfsvorrichtung (4) ein Schaltschrank oder ein Batterieschrank ist.

10. Verfahren zum Betreiben einer handgeführten, mobilen Hebevorrichtung (2) umfassend folgende Schritte,
- Anbringen einer Hebekonsole (8) mit einer Antriebsvorrichtung (6), einer Seilführungsvorrichtung (12) und einer Stützvorrichtung (10) an einer Hilfsvorrichtung (4),
- Aufnehmen einer Last (30) mittels einer Greifvorrichtung (16),
**gekennzeichnet durch**
- die Messung einer Kraft, die an der Hebekonsole (8) anliegt und
- Bestimmung einer an der Greifvorrichtung (16) anliegenden Vertikalkraft (F_{S}) aus der an der Hebekonsole gemessenen Kraft.

11. Verfahren nach Anspruch 10, **dadurch gekennzeichnet, dass** an der Hebekonsole eine Horizontalkraft (F_{AS}, F_{SA}) gemessen wird.

12. Verfahren nach Anspruch 10 oder 11, **dadurch gekennzeichnet, dass** beim Aufnehmen der Last eine Tarierung zur Bestimmung der Gewichtskraft erfolgt und mittels der gemessenen Horizontalkraft (F_{AS}, F_{SA}) die vom Bediener eingebrachte Steuerkraft ermittelt wird.
